# EUROPÄISCHE PATENTSCHRIFT

(11) **EP 2 445 742 B1**
(45) Veröffentlichungstag und Bekanntmachung des Hinweises auf die Patenterteilung: **23.11.2016**
(21) Anmeldenummer: 10724071.5
(22) Anmeldetag: 07.06.2010
(51) Int. Cl.: F16H 61/32, F16H 63/34, F16H 63/48, B60K 17/06

(54) **FAHRZEUGGETRIEBEFAMILIE**
VEHICLE TRANSMISSION FAMILY
FAMILLE DE BOÎTES DE VITESSES D'UN VÉHICULE

(30) Priorität: 23.06.2009 DE 102009030027
(43) Veröffentlichungstag der Anmeldung: 02.05.2012
(73) Patentinhaber: MAGNA Powertrain GmbH & Co KG, 8502 Lannach (AT)
(72) Erfinder: SCHEUCHER, Rene, A-8342 Gnas (AT)
(74) Vertreter: Rausch, Gabriele
(86) Internationale Anmeldenummer: PCT/EP2010/057910
(87) Internationale Veröffentlichungsnummer: WO 2010/149481

(56) Entgegenhaltungen:
- EP-A1- 1 473 182
- DE-A1-102007 026 599
- US-A1- 2005 061 599
- US-A1- 2009 071 275

## Beschreibung

Die vorliegende Erfindung betrifft eine Familie von Fahrzeuggetrieben mit zumindest einem ersten Fahrzeuggetriebe und einem zweiten Fahrzeuggetriebe.

Aufgrund des erheblichen Kostendrucks in der Fahrzeugtechnik wird es immer wichtiger, die Komponenten eines Fahrzeugs so zu gestalten, dass sie möglichst vielseitig einsetzbar sind bzw. durch geringfügige Änderungen an das jeweilige Anforderungsprofil anpassbar sind.

Aus der US 2009/071275 A1 ist ein Fahrzeuggetriebe bekannt, das ein Aktuierungssystem zur Aktuierung einer Parksperre aufweist.

Es ist daher eine Aufgabe der vorliegenden Erfindung, eine Familie von Fahrzeuggetrieben zu schaffen, deren Familienmitglieder ohne umfangreiche konstruktive Änderungen möglichst vielseitig einsetzbar sind.

Die vorstehend genannte Aufgabe wird erfindungsgemäß durch Fahrzeuggetriebe mit den Merkmalen des Anspruchs 1 gelöst.

Die erfindungsgemäße Fahrzeuggetriebefamilie zeichnet sich zunächst dadurch aus, dass das erste und das zweite Fahrzeuggetriebe modular aufgebaut sind und beide Fahrzeuggetriebe ein Aktuierungssystem aufweisen, das im Wesentlichen baugleich ist. Das Aktuierungssystem ist in dem ersten Fahrzeuggetriebe zur Aktuierung einer Parksperre und in dem zweiten Fahrzeuggetriebe zur Aktuierung einer von der Parksperre verschiedenen Funktionseinheit, insbesondere einer Kupplung vorgesehen.

Durch die Verwendung eines im Wesentlichen baugleichen Aktuierungssystems wird eine Standardisierung erreicht, die schon allein aufgrund höher Stückzahlen der Einzelkomponenten niedrigere Kosten und daher Wettbewerbsvorteile nach sich zieht. Um ein Fahrzeuggetriebe der erfindungsgemäßen Fahrzeuggetriebefamilie für eine andere Anwendung umzurüsten, muss zudem lediglich die mit dem Aktuierungssystem verbundene Funktionseinheit ausgetauscht werden und nicht zusätzlich auch das Aktuierungssystem. So kann auch auf einfache Weise auf Nachfrageschwankungen bei einzelnen Mitgliedern der Fahrzeuggetriebefamilie reagiert werden.

Außerdem ist erfindungsgemäß vorgesehen, dass das Aktuierungssystem relativ zu zumindest einer vorbestimmten Komponente des Fahrzeuggetriebes bei dem ersten Fahrzeuggetriebe und bei dem zweiten Fahrzeuggetriebe in der gleichen Position angeordnet ist. Unter der Position des Aktuierungssystems ist dessen allgemeine Lage im Raum zu verstehen, die in Bezug auf eine vorbestimmte Komponente festgelegt ist. Eine derartige Komponente kann beispielsweise eine Getriebewelle oder ein bestimmtes Getriebezahnrad sein. Die Position des Aktuierungssystems kann auch in Bezug auf das Gehäuse oder bestimmte Gehäuseabschnitte definiert sein. Diese Maßnahme dient der weiteren Standardisierung und erhöht somit die Flexibilität der Anwendung der Mitglieder der Fahrzeuggetriebefamilie.

Weitere Ausführungsformen der Erfindung sind in der Beschreibung, den Zeichnungen und den Unteransprüchen angegeben.

Gemäß einer vorteilhaften Ausführungsform der vorliegenden Erfindung ist ein Ausgangselement des Aktuierungssystems derart ausgestaltet, dass es mit einem Aktuierungseingangselement der Parksperre und einem Aktuierungseingangselement der von der Parksperre verschiedenen Funktionseinheit kompatibel ist. Durch die Vereinheitlichung der "Schnittstelle" zwischen dem Aktuierungssystem und der zu aktuierenden Parksperre/Funktionseinheit wird eine weitere Kostensenkung erreicht.

Bevorzugt umfassen das erste Fahrzeuggetriebe und das zweite Fahrzeuggetriebe eine Getriebewelle und das Aktuierungssystem eine Aktuatorwelle. In beiden Fahrzeuggetrieben ist ein Abstand zwischen der Getriebewelle und der Aktuatorwelle identisch. Insbesondere sind die Getriebewelle und die Aktuatorwelle parallel versetzt angeordnet.

Nachfolgend wird die vorliegende Erfindung rein beispielhaft anhand vorteilhafter Ausführungsformen unter Bezugnahme auf die beigefügten Zeichnungen beschrieben. Es zeigen:
- Fig. 1: ein Aktuierungssystem eines Fahrzeuggetriebes der erfindungsgemäßen Familie von Fahrzeuggetrieben in Verbindung mit einer Parksperre,
- Fig. 2: das Aktuierungssystem der Fig. 1 in Verbindung mit einer Kupplung.

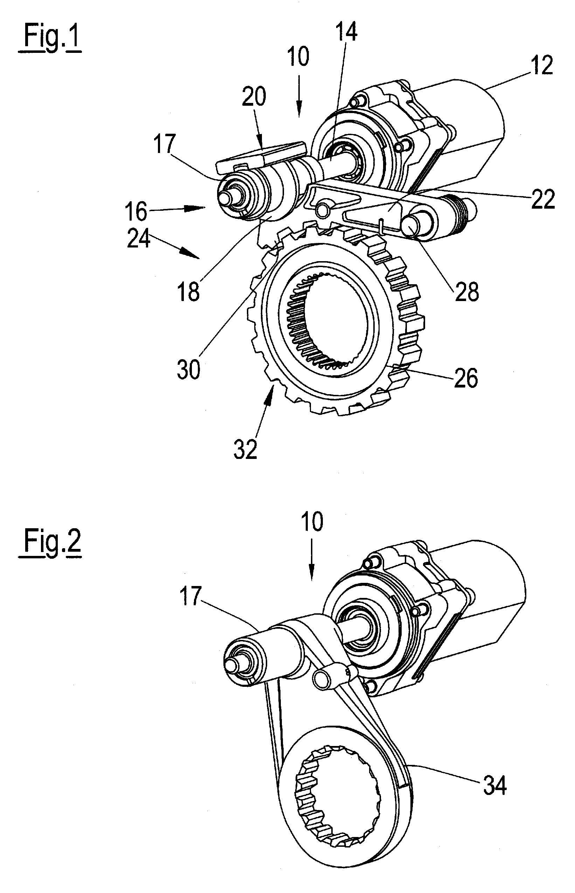

Fig. 1 zeigt einen Aktuator 10, der einen Motor 12 umfasst. Der Motor 12 versetzt eine Motorwelle 14 in eine Drehbewegung, die von einer Wandlereinrichtung 16 in eine translatorische Bewegung einer Führungshülse 17 umgesetzt wird, auf die ein Aktuatorkonus 18 aufgesteckt wird. Der Aktuatorkonus 18 wird durch ein Führungselement 20 gegen eine Verdrehung gesichert und in seiner Translationsbewegung geführt. Bei einer Aktuierung wird die Drehbewegung der Motorwelle 14 in eine Bewegung des Aktuatorkonus 18 zu dem Motor 12 hin umgesetzt, die über Anlaufschrägen, die an dem Aktuatorkonus 18 und einer Sperrklinke 22 ausgebildet sind, in eine Aktuierungsbewegung der Sperrklinke 22 umgewandelt wird, d.h. die Sperrklinke 22 wird nach unten gedrückt.

Die Sperrklinke 22 ist Teil einer Parksperre 24. Die Parksperre 24 umfasst ferner ein Klinkenrad 26, das mit einer nicht gezeigten Getriebewelle, die parallel versetzt zu der Motorwelle 14 angeordnet ist, drehfest verbunden ist. Wie bereits beschrieben, wird bei einer Aktuierung die um einen Klinkenbolzen 28 verschwenkbar gelagerte Sperrklinke 22 nach unten gedrückt und rastet mit an ihr angeordneten Sperrzähnen 30 in entsprechend geformte Ausnehmungen 32 des Klinkenrads 26 ein.

Um den Aktuator 10 zur Aktuierung einer von der Parksperre 24 verschiedenen Einheit zu nutzen, kann die Parksperre 24 entweder durch eine Funktionseinheit ersetzt werden, die eine Anlaufschräge aufweist, die zu der des Aktuatorkonus 18 kompatibel/komplementär ist. Bei einer abweichenden Anlaufschräge an der zu aktuierenden Funktionseinheit kann der Aktuatorkonus 18 ausgetauscht werden. Es ist grundsätzlich auch möglich, anstelle des Aktuatorkonus 18 ein gänzlich anderes Element vorzusehen, das eine Kopplung zwischen der Führungshülse 17 und der zur aktuierenden Funktionseinheit herstellt.

In Fig. 2 ist wieder der Aktuator 10 der Fig. 1 gezeigt, weshalb sich eine erneute detaillierte Beschreibung des Aktuators 10 erübrigt. Die Führungshülse 17 steht hier allerdings nicht mit dem Aktuatorkonus 18 in Kontakt, sondern wirkt direkt mit einem Aktuierungshebel 34 einer nicht näher dargestellten Kupplung zusammen. Anstelle des Aktuierungshebels 34 kann beispielsweise auch eine Schaltgabel eines Schaltgetriebes vorgesehen sein.

Der Aktuator 10 ist in den Fig. 1 und Fig. 2 baugleich. Die Führungshülse 17 stellt ein Ausgangsglied dar, das bei Aktuierung eine translatorische Bewegung ausführt. Der Aktuator 10 kann auf einfache Weise umgerüstet werden, um unterschiedliche Funktionseinheiten - hier beispielhaft anhand einer Parksperre 24 und einer nicht gezeigten Kupplung dargestellt - zu betreiben, die durch die beschriebene Aktuierungsbewegung aktuierbar sind. Die mit den Aktuator 10 versehenen Getriebe bilden somit eine Familie. Die Lage des Aktuators 10 relativ zu vordefinierten Komponenten (einzelnen Bauteilen oder Baugruppen) des Getriebes kann dabei festgelegt sein, um einen noch höheren Standardisierungsgrad zu erreichen.

In den vorstehend beschriebenen Figuren ist die genannte vordefinierte Komponente beispielhaft eine Getriebewelle, die mit der Parksperre 24 der Fig. 1 in bestimmten Situationen drehfest gesichert werden soll. Bei der Konfiguration der Fig. 2 ist eine Kupplung vorgesehen, um die gleiche Getriebewelle selektiv antriebswirksam mit weiteren Getriebebestandteilen zu verbinden. Der Achsabstand zwischen der Motorwelle 14 und der nicht gezeigten Getriebewelle, die parallel zu der Motorwelle 14 verläuft, ist dabei in Fig. 1 und Fig. 2 gleich. Dieses Merkmal erhöht zwar die angestrebte Modularität, ist jedoch grundsätzlich nicht zwingend notwendig, da unterschiedliche Achsabstände oder Achsorientierungen durch entsprechend ausgestaltete Aktuierungseingangselemente der Funktionseinheiten ausgeglichen werden können.

### Bezugszeichenliste

- 10: Aktuator
- 12: Motor
- 14: Motorwelle
- 16: Wandlereinrichtung
- 18: Aktuatorkonus
- 17: Führungshülse
- 20: Führungselement
- 22: Sperrklinke
- 24: Parksperre
- 26: Klinkenrad
- 28: Klinkenbolzen
- 30: Sperrzahn
- 32: Ausnehmung
- 34: Aktuierungshebel

## Patentansprüche

1. Fahrzeuggetriebe, wobei die Fahrzeuggetriebe modular aufgebaut sind und ein im Wesentlichen baugleiches Aktuierungssystem (10) aufweisen, wobei das Aktuierungssystem (10) in einer ersten Bauform des Fahrzeuggetriebes zur Aktuierung einer Parksperre (24) und in einer zweiten Bauform des Fahrzeuggetriebes zur Aktuierung einer von der Parksperre verschiedenen Funktionseinheit, insbesondere einer Kupplung vorgesehen ist, wobei das Aktuierungssystem (10) relativ zu zumindest einer vorbestimmten Komponente des Fahrzeuggetriebes bei dem ersten Fahrzeuggetriebe und bei dem zweiten Fahrzeuggetriebe in der gleichen Position angeordnet ist.

2. Fahrzeuggetriebe nach Anspruch 1,
**dadurch gekennzeichnet, dass**
ein Ausgangselement (17) des Aktuierungssystems (10) derart ausgestaltet ist, dass es mit einem Aktuierungseingangselement (18) der Parksperre und einem Aktuierungseingangselement (34) der von der Parksperre (24) verschiedenen Funktionseinheit kompatibel ist.

3. Fahrzeuggetriebe nach Anspruch 1 oder 2,
**dadurch gekennzeichnet, dass**
das erste Fahrzeuggetriebe und das zweite Fahrzeuggetriebe eine Getriebewelle umfassen und dass das Aktuierungssystem eine Aktuatorwelle (14) umfasst, wobei in beiden Fahrzeuggetrieben ein Achsabstand zwischen der Getriebewelle und der Aktuatorwelle (14) identisch ist.

## Claims

1. Vehicle transmissions, the vehicle transmissions being of modular construction and having a substantially structurally identical actuation system (10), the actuation system (10) being provided in a first design of the vehicle transmission for actuating a parking lock (24) and in a second design of the vehicle transmission for actuating a functional unit which is different from the parking lock, in particular a clutch, the actuation system (10) being arranged relative to at least one predefined component of the vehicle transmission in the case of the first vehicle transmission and in the same position in the case of the second vehicle transmission.

2. Vehicle transmissions according to Claim 1, **characterized in that** an output element (17) of the actuation system (10) is configured in such a way that it is compatible with an actuation input element (18) of the parking lock and an actuation input element (34) of the functional unit which is different from the parking lock (24).

3. Vehicle transmissions according to Claim 1 or 2, **characterized in that** the first vehicle transmission and the second vehicle transmission comprise a transmission shaft, and **in that** the actuation system comprises an actuator shaft (14), an axial spacing between the transmission shaft and the actuator shaft (14) being identical in the two vehicle transmissions.

## Revendications

1. Boîtes de vitesses d'un véhicule, les boîtes de vitesses ayant une construction modulaire et présentant un système d'actionnement (10) de construction essentiellement identique, le système d'actionnement (10) étant prévu, dans une première forme de construction de la boîte de vitesses de véhicule, pour actionner un verrouillage de stationnement (24) et, dans une deuxième forme de construction de la boîte de vitesses de véhicule, pour actionner une unité fonctionnelle différente du verrouillage de stationnement, en particulier un embrayage, le système d'actionnement (10) étant disposé, par rapport à au moins un composant prédéterminé de la boîte de vitesses du véhicule, dans la même position dans le cas de la première boîte de vitesses de véhicule et dans le cas de la deuxième boîte de vitesses de véhicule.

2. Boîtes de vitesses d'un véhicule selon la revendication 1, **caractérisées en ce qu'**un élément de sortie (17) du système d'actionnement (10) est configuré de telle sorte qu'il soit compatible avec un élément d'entrée d'actionnement (18) du verrouillage de stationnement et un élément d'entrée d'actionnement (34) de l'unité fonctionnelle différente du verrouillage de stationnement (24).

3. Boîtes de vitesses d'un véhicule selon la revendication 1 ou 2, **caractérisées en ce que** la première boîte de vitesses de véhicule et la deuxième boîte de vitesses de véhicule comprennent un arbre de boîte de vitesses et **en ce que** le système d'actionnement comprend un arbre d'actionneur (14), une distance axiale entre l'arbre de boîte de vitesses et l'arbre d'actionneur (14) étant identique dans les deux boîtes de vitesses de véhicule.
